# EUROPEAN PATENT SPECIFICATION

(11) **EP 2 039 407 B1**
(45) Date of publication and mention of the grant of the patent: **12.11.2014**
(21) Application number: 08003391.3
(22) Date of filing: 25.02.2008
(51) Int. Cl.: C02F 103/08, B01D 1/26, B01D 3/06, B01D 3/16, B01D 5/00, C02F 1/04

(54) **MSF desalination apparatus with heat-pipe heat dissipater**
MSF-Entsalzungsvorrichtung mit Wärmerohr-Wärmeableiter
Appareil de désalinisation MSF avec dissipateur de chaleur dans un caloduc

(30) Priority: 21.09.2007 KR 20070096610
(43) Date of publication of application: 25.03.2009
(73) Proprietor: Doosan Heavy Industries & Construction Co., Ltd., Gyeongsangnam-do 641-792 (KR)
(72) Inventor: Byun-Sung Park,, Seo-gu, Daejeon, (KP); In-Seop Song,, Gyeongsangnam-do, (KP); Young-Jin Baek,, Bundang-gu, Seongnam-si Gyeonggi-do, (KP)
(74) Representative: Grünecker, Kinkeldey, Stockmair & Schwanhäusser

(56) References cited:
- WO-A1-86/02151
- GB-A- 2 417 435
- JP-A- 63 143 902
- US-A- 3 405 037

## Description

### Field of the Invention

The present invention relates to a seawater desalination process, and more particularly to a multi-stage flashing (MSF) seawater desalination process, which heats and evaporates seawater so as to produce fresh water.

### Description of the Related Art

Generally, seawater desalination apparatuses artificially produce fresh water at a region where water is lacking, so as to use the fresh water as drinking water, agricultural water, and industrial water. Various methods for separating fresh water from seawater, such as evaporation, reverse osmosis, electrodialysis, and freezing, and seawater desalination apparatuses using the above methods have been currently developed and used.

Among these seawater desalination apparatuses, a seawater desalination apparatus using evaporation receives steam of a high temperature supplied from a steam turbine or a heat recovery steam generator of a power plant and heats brine water using the steam, obtains fresh water from the heated brine water, and finally dissipates the remaining heat.

Now, most of high-capacity seawater desalination apparatuses inhale seawater of a low temperature and use the seawater as cooling water for dissipating remaining heat. For this reason, the seawater desalination apparatuses require a high-capacity seawater supply system. Further, the seawater desalination apparatuses generate various environmental problems due to a large amount of seawater discharged to the ocean.

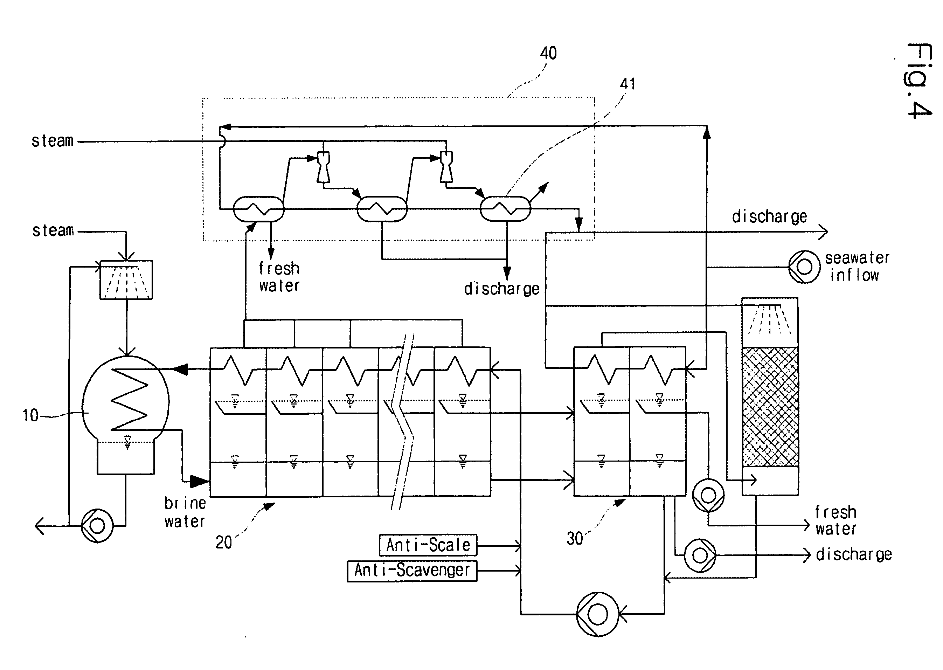

Particularly, a MSF seawater desalination apparatus, as shown in FIG. 4, receives steam of a high temperature from a power generating installation and heats brine water using the steam through a seawater heater 10, and the heated brine water is converted into fresh water through an evaporator including a heat recovery unit 20 and a heat dissipation unit 30. A part of the remaining brine water is discharged to the sea, and the remainder is circulated again and recycled to produce fresh water.

Further, a seawater supply system supplies cooling water to a vacuum system 40, which reduces the pressure of the evaporator so as to lower the boiling point of water, and the heat dissipation unit 30 of the evaporator. A part of the cooling water used by the heat dissipation unit 30 of the evaporator is used to produce fresh water, and the remainder is discharged to the sea. All the cooling water used by the vacuum system 40 is discharged to the sea.
Accordingly, the seawater of a high temperature discharged to the sea raises the temperature of surrounding seawater, and thus raises temperature of seawater flowing into the seawater desalination apparatus and lowers the performance of the apparatus as well as and exerts a bad influence on an environment surrounding the seawater desalination apparatus.

Further, in order to supply a large amount of seawater to the seawater desalination apparatus, a seawater intake and a seawater supply pump must have a high capacity, and pipes connected from the seawater intake to the seawater desalination apparatus must have a high capacity.

GB 2,417,435 A refers to an MSF desalination system as a first separation process carried out by a heat recovery stage and a heat reject stage, wherein from the heat recovery stage at least one distillate stream is supplied to a second separation process such as MED, VC or RO processes. The energy of the high temperature distillate stream can be recovered by flashing to the MED process cycle or preheating an RO process. However, it is the technical disadvantage that during the first separation process, a huge amount of seawater is used to cool down the fresh water received during the heat reject stages.

US 3,405,037 refers to the removal of water of an effluent and treating the water by heat and evaporation such as to render it suitable for use in evaporative cooling equipment.

JP 63-143902 A refers to a method by which geothermal water is processed by a multi-stage flash-type heat exchanger.

WO 86/02151 discloses a desalination plant with a heat exchanger.

It is the object of the present invention to provide an MSF seawater desalination process, which provides efficient means to cool down fresh water and also can be operated with a reduced amount of seawater such that a reduced environmental impact occurs.

This object can be solved with the technical features of claim 1 or with the technical features of independent claim 4. Improved embodiments are provided by the dependent claims.

### SUMMARY OF THE INVENTION

Therefore, the present invention has been made in view of the above problems, and it is an object of the present invention to provide a MSF seawater desalination apparatus with a pipe-type heat dissipater, which allows fresh water, extracted by a heat recovery unit, to be cooled by the pipe-type heat dissipater and be discharged to the outside without passing through a heat dissipation unit.

It is a further object of the present invention to provide a MSF seawater desalination apparatus with a pipe-type heat dissipater, which achieves efficient heat exchange between fresh water of a high temperature and the surrounding atmosphere.

It is another object of the present invention to provide a MSF seawater desalination apparatus with a pipe-type heat dissipater, which more rapidly discharges the heat of fresh water to the atmosphere.

It is yet another object of the present invention to provide a MSF seawater desalination apparatus with a pipe-type heat dissipater, which allows cooling water of a high temperature, discharged from a heat dissipation unit, to be cooled by heat exchange with the surrounding atmosphere through the pipe-type heat dissipater including heat pipes and be circulated again to the heat dissipation unit.

In accordance with one aspect of the present invention, the above and other objects can be accomplished by the provision of a MSF seawater desalination apparatus, which heats seawater by heat exchange with steam of a high temperature, allows the heated seawater to sequentially pass through a heat recovery unit and a heat dissipation unit so as to produce fresh water through evaporation and condensation, and has a vacuum system provided with a plurality of condensers achieving heat exchange between the seawater and the high-temperature and high-pressure steam so as to maintain a vacuum state in the heat recovery unit, comprising a pipe-type heat dissipater for accelerating heat exchange between the fresh water of a high temperature discharged from the heat recovery unit and the atmosphere by supplying condensing water of a low temperature, supplied from the vacuum system, to heat pipes.

The pipe-type heat dissipater may comprise a fresh water supply pipe, along which the fresh water of a high temperature discharged from the heat recovery unit flows, the heat pipes, each of which is provided with one end disposed within the fresh water supply pipe and the other end disposed at the outside of the fresh water supply pipe, and a condensing water supply pipe, which sprays the condensing water of a low temperature, supplied from the vacuum system, to the heat pipes.

The pipe-type heat dissipater may further comprise a cooling fan, which cools the heat pipes by means of an air flow.

In accordance with another aspect of the present invention, there is provided a MSF seawater desalination apparatus, which heats seawater by heat exchange with steam of a high temperature, allows the heated seawater to sequentially pass through a heat recovery unit and a heat dissipation unit so as to produce fresh water through evaporation and condensation, and has a vacuum system provided with a plurality of condensers achieving heat exchange between the seawater and the high-temperature and high-pressure steam so as to maintain a vacuum state in the heat recovery unit, comprising a pipe-type heat dissipater for rapidly dissipating a large amount of heat to the atmosphere by cooling water of a high temperature discharged from the heat dissipation unit and the evaporation of condensing water of a low temperature supplied from the vacuum system.

### BRIEF DESCRIPTION OF THE DRAWINGS

The above and other objects, features and other advantages of the present invention will be more clearly understood from the following detailed description taken in conjunction with the accompanying drawings, in which:
FIG. 1 is a schematic view of a MSF seawater desalination apparatus in accordance with one embodiment of the present invention;
FIG. 2 is a schematic view of one example of a pipe-type heat dissipater of the MSF seawater desalination apparatus of FIG. 1;
FIG. 3 is a schematic view of a MSF seawater desalination apparatus in accordance with another embodiment of the present invention; and
FIG. 4 is a schematic view of a conventional MSF seawater desalination apparatus.

### DESCRIPTION OF THE PREFERRED EMBODIMENTS

Now, preferred embodiments of the present invention will be described in detail with reference to the annexed drawings.

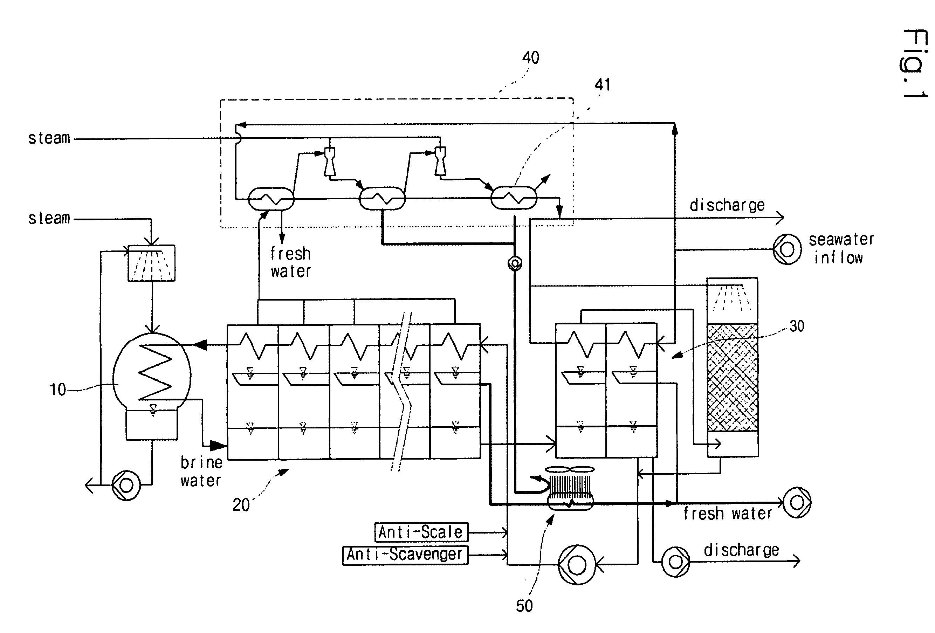

FIG. 1 is a schematic view of a multi-stage flashing (MSF) seawater desalination apparatus in accordance with one embodiment of the present invention. As shown in FIG. 1, the MSF seawater desalination apparatus heats and evaporates seawater using steam of a high temperature supplied from a power generating installation, and thus produces fresh water. Particularly, the MSF seawater desalination apparatus has a pipe-type heat dissipater 50 for cooling the fresh water of a high temperature discharged from a heat recovery unit 20 so as to reduce the amount of cooling seawater for cooling and condensing the fresh water heated to a high temperature during a fresh water producing process and perform an efficient cooling operation.

The MSF seawater desalination apparatus, which heats and evaporates seawater and thus produces fresh water, includes a heater 10 heating the seawater by heat exchange with steam of a high temperature, the heat recovery unit 20 evaporating the seawater heated by the heater 10, and a heat dissipation unit 30 producing the fresh water by heat exchange between the seawater passed through the heat recovery unit 20 and seawater of a low temperature.

Further, a vacuum system 40, which removes non-condensable gas generated from the fresh water producing process and includes a plurality of condensers 41 achieving heat exchange between the seawater of a low temperature and steam of a high temperature so as to decrease the pressure in the heat recovery unit 20 and lower the boiling point of water, is connected to the heat recovery unit 20, thus allowing the heat recovery unit 20 to efficiently evaporate the seawater.

Here, the seawater pumped up from the sea is used as the cooling water of the heat dissipation unit 30. Then, most of the seawater is discharged to the sea, and a part of the seawater is mixed with brine water discharged from the heat dissipation unit 30 and the mixed water is used as the cooling water of the heat recovery unit 20, is supplied to the heater 10, and is heated by steam of a high temperature to be converted into brine water. Then, the heated brine water is evaporated by sequentially passing through the heat recovery unit 20 and the heat dissipation unit, thus producing fresh water.

The pipe-type heat dissipater 50 cools the fresh water condensed by the heat recovery unit 20 and then discharged from the heat recovery unit 20, and thus allows the heat dissipation unit 30 to efficiently condensate the fresh water using a small amount of the seawater of a low temperature. The pipe-type heat dissipater 50 achieves heat exchange between the fresh water discharged from the heat recovery unit 20 and the atmosphere using condensing water of the above vacuum system 40, and thus cools the fresh water.

Thereby, it is possible to prevent the fresh water produced by the heat recovery unit 20 from flowing to the heat dissipation unit 30 and to separately cool the fresh water condensed by the heat recovery unit 20, thus significantly reducing the amount of seawater consumed to condense the fresh water and preventing various environmental disruptions caused by the discharge of the seawater of a high temperature to the coast. Further, it is possible to lower the temperature of seawater supplied to the MSF seawater desalination apparatus, thus increasing the performance of the MSF seawater desalination apparatus and reducing the capacities of a seawater intake and a seawater supply pump.

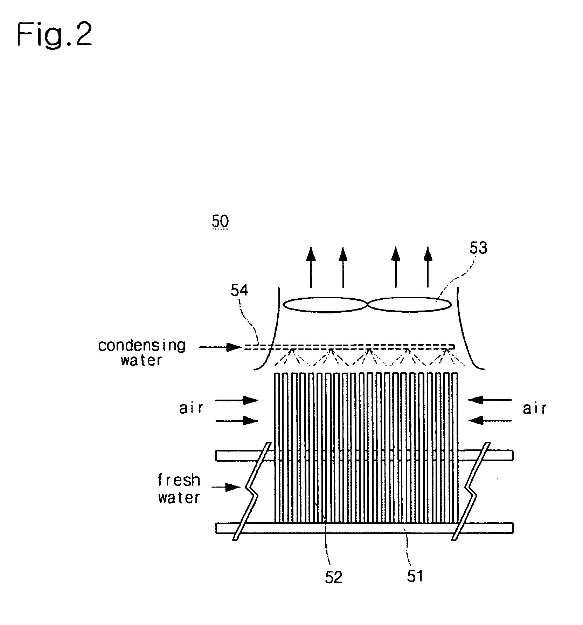

FIG. 2 is a schematic view of one example of the pipe-type heat dissipater 50 of the MSF seawater desalination apparatus of FIG. 1. As shown in FIG. 2, the pipe-type heat dissipater 50 includes a fresh water supply pipe 51, along which the fresh water of a high temperature discharged from the heat recovery unit 20 flows, heat pipes 52, each of which is provided with one end disposed within the fresh water supply pipe 51 and the other end disposed at the outside of the fresh water supply pipe 51, and a condensing water supply pipe 54, which sprays condensing water of a low temperature, supplied from the vacuum system 40, to the heat pipes 52.

After the heat of the fresh water flowing along the fresh water supply pipe 51 is transmitted to the heat pipes 52, the heat of the heat pipes 52 is dissipated to the atmosphere, and the supplied condensing water is evaporated, thereby rapidly dissipating the heat by as much as the evaporation latent heat to the atmosphere and thus efficiently cooling the fresh water flowing along the fresh water supply pipe 51.

Preferably, the above pipe-type heat dissipater 50 further includes a general cooling fan 53, which cools the heat pipes 52 partially exposed to the outside of the fresh water supply pipe 51, thereby allowing the condensing water flowing along the heat pipes 52 to be more rapidly evaporated and thus maximizing a cooling effect.

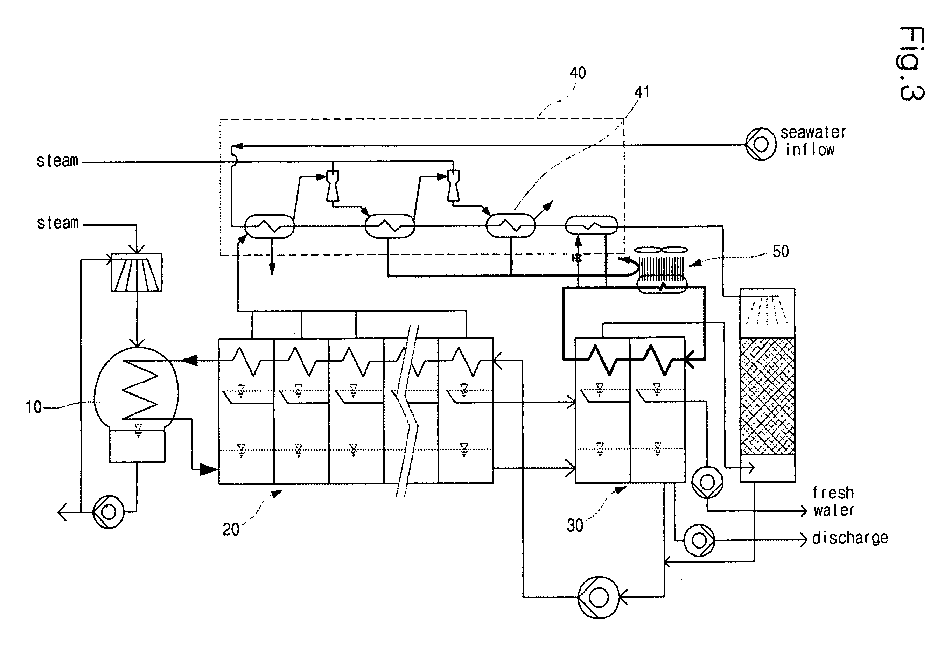

FIG. 3 is a schematic view of a MSF seawater desalination apparatus in accordance with another embodiment of the present invention. In this embodiment, a pipe-type heat dissipater 50 having the same construction as the pipe-type heat dissipater 50 of the earlier embodiment achieves heat dissipation to the atmosphere using cooling water of a high temperature discharged from a heat dissipation unit 30 and condensing water of a low temperature supplied from a vacuum system 40.

Here, the cooling water passed through the pipe-type heat dissipater 50 is circulated again into the heat dissipation unit 30, and the circulation is repeated, thereby dissipating the heat of the heat dissipation unit 30 to the atmosphere. Accordingly, it is possible to minimize the amount of seawater required to produce the same amount of fresh water and significantly reduce the amount of the high-temperature cooling water discharged to the sea.

As apparent from the above description, the present invention provides a MSF seawater desalination apparatus with a pipe-type heat dissipater, in which fresh water discharged from a heat recovery unit is cooled by the pipe-type heat dissipater and is then discharged to the outside. Thus, the MSF seawater desalination apparatus significantly reduces the amount of cooling seawater supplied to a heat dissipation unit so as to decrease ecosystem destruction in the coast due to heated seawater, and lowers the temperature of seawater supplied to the apparatus so as to increase the performance of the apparatus and to decrease the capacities of a seawater intake and a seawater supply pump.

The pipe-type heat dissipater includes heat pipes connected to a fresh water supply pipe so as to achieve heat exchange between the fresh water of a high temperature and the atmosphere of a low temperature, and condensing water of a vacuum system is supplied to the heat pipes so as to efficiently achieve the heat exchange, thereby rapidly cooling the high-temperature fresh water using the evaporation latent heat of the condensing water without using seawater of a low temperature.

The pipe-type heat dissipater further includes a cooling fan for accelerating the evaporation of the condensing water so as to more rapidly dissipate heat transmitted by the heat pipes to the atmosphere, thereby increasing a cooling efficiency.

Further, the present invention provides a MSF seawater desalination apparatus with a pipe-type heat dissipater, in which cooling water of a high temperature extracted by a heat dissipation unit is cooled by the pipe-type heat dissipater and then circulated again into the heat dissipation unit. Thus, the MSF seawater desalination apparatus significantly reduces the amount of seawater for cooling the fresh water supplied to the apparatus so as to decrease ecosystem destruction in the coast due to heated seawater, and lowers the temperature of seawater supplied to the apparatus so as to increase the performance of the apparatus and to decrease the capacities of a seawater intake and a seawater supply pump.

## Claims

1. A MSF seawater desalination process using an apparatus, which heats seawater by heat exchange with steam of a high temperature, allows the heated seawater to sequentially pass through a heat recovery unit (20) and a heat dissipation unit (30) so as to produce fresh water through evaporation and condensation;
achieving heat exchange between the seawater and the high-temperature and highpressure steam by a vacuum system (40) provided with a plurality of condensers (41) so as to maintain a vacuum state in the heat recovery unit (20); **characterized by** comprising steps of:
extracting the fresh water of a high temperature from the heat recovery unit (20) to supply the extracted fresh water to a fresh water supply pipe (51) of a pipe-type heat dissipater (50), which further comprises heat pipes (52), one end of each of the heat pipes (52) being disposed within the fresh water supply pipe (51) and the other end being disposed at the outside of the fresh water supply pipe (51), and
spraying condensing water of a low temperature, supplied from the vacuum system (40), to the heat pipes (52) of the pipe-type heat dissipater (50) disposed at the outside of the fresh water supply pipe (51) to accelerate heat exchange between the fresh water of the high temperature discharged from the heat recovery unit (20) and an atmosphere.

2. The MSF seawater desalination process according to claim 1, wherein spraying the condensing water of the low temperature, comprises spraying the condensing water to the heat pipes (52) through a condensing water supply pipe (54).

3. The MSF seawater desalination process according to claim 2, further comprising cooling the heat pipes (52) by means of an air flow through a cooling fan (53).

4. A MSF seawater desalination process using an apparatus, which heats seawater by heat exchange with steam of a high temperature, allows the heated seawater to sequentially pass through a heat recovery unit (20) and a heat dissipation unit (30) so as to produce fresh water through evaporation and condensation
maintaining a vacuum state in the heat recovery unit (20) using a vacuum system (40) provided with a plurality of condensers (41) achieving heat exchange between the seawater and the high temperature and high pressure steam, **characterized by** comprising steps of:
circulating cooling water of a high temperature from the heat dissipation unit (30) by means of a circulating pipe of a pipe-type heat dissipater (50) which further comprises heat pipes (52), wherein one end of each of the heat pipes (52) being disposed within the circulating pipe and the other end being disposed at the outside of the circulating pipe; and
spraying condensing water of a low temperature, supplied from the vacuum system (40), to the heat pipes (52) of the pipe-type heat dissipater (50) disposed at the outside of the circulating pipe to accelerate heat exchange between the cooling water discharged from the heat dissipation unit (30) and an atmosphere.

5. The MSF seawater desalination process according to claim 4, wherein spraying the condensing water of the low temperature, comprises spraying the condensing water to the heat pipes (52) through a condensing water supply pipe (54).

6. The MSF seawater desalination process according to claim 5, further comprising cooling the heat pipes (52) by means of an air flow through a cooling fan (53).

## Patentansprüche

1. MSF-Meerwasser-Entsalzungsverfahren unter Verwendung einer Vorrichtung, die Meerwasser durch einen Wärmetausch mit Dampf mit einer hohen Temperatur erhitzt und gestattet, dass das erhitzte Meerwasser sequentiell durch eine Wärmerückgewinnungseinheit (20) und eine Wärmeableitungseinheit (30) hindurchgeht, um Süßwasser durch eine Verdampfung und Kondensation zu erzeugen, umfassend:
Erzielen eines Wärmetauschs zwischen dem Meerwasser und dem Dampf mit einer hohen Temperatur und einem hohen Druck durch ein Vakuumsystem (40), das mit einer Vielzahl von Kondensatoren (41) versehen ist, um einen Vakuumzustand in der Wärmerückgewinnungseinheit (20) aufrechtzuerhalten, **gekennzeichnet durch** die folgenden Schritte:
Extrahieren des Süßwassers mit einer hohen Temperatur von der Wärmerückgewinnungseinheit (20), um das extrahierte Süßwasser zu einem Süßwasser-Zuführrohr (51) eines Rohrtyp-Wärmeableiters (50) zuzuführen, der weiterhin Wärmerohre (52) umfasst, wobei ein Ende jedes der Wärmerohre (52) in dem Süßwasser-Zuführrohr (51) angeordnet ist und das andere Ende außerhalb des Süßwasser-Zuführrohrs (51) angeordnet ist, und
Sprühen von Kondenswasser mit einer niedrigen Temperatur, das von dem Vakuumsystem (40) zugeführt wird, auf die Wärmerohre (52) des Rohrtyp-Wärmeableiters (50) außerhalb des Süßwasser-Zuführrohrs (51), um den Wärmetausch zwischen dem aus der Wärmerückgewinnungseinheit (20) ausgegebenen Süßwasser mit der hohen Temperatur und einer Atmosphäre zu beschleunigen.

2. MSF-Meerwasser-Entsalzungsverfahren nach Anspruch 1, wobei das Sprühen des Kondenswassers mit einer niedrigen Temperatur das Sprühen des Kondenswassers auf die Wärmerohre (52) durch ein Kondenswasser-Zuführrohr (54) umfasst.

3. MSF-Meerwasser-Entsalzungsverfahren nach Anspruch 2, das weiterhin das Kühlen der Wärmerohre (52) mittels eines Luftflusses von einem Kühlventilator (53) umfasst.

4. MSF-Meerwasser-Entsalzungsverfahren unter Verwendung einer Vorrichtung, die Meerwasser durch einen Wärmetausch mit Dampf mit einer hohen Temperatur erhitzt und gestattet, dass das erhitzte Meerwasser sequentiell durch eine Wärmerückgewinnungseinheit (20) und eine Wärmeableitungseinheit (30) hindurchgeht, um Süßwasser durch eine Verdampfung und Kondensation zu erzeugen, umfassend:
Aufrechterhalten eines Vakuumzustands in der Wärmerückgewinnungseinheit (20) unter Verwendung eines Vakuumsystems (40), das mit einer Vielzahl von Kondensatoren (41) versehen ist, um einen Wärmetausch zwischen dem Meerwasser und dem Dampf mit einer hohen Temperatur und einem hohen Druck zu erzielen, **gekennzeichnet durch** die folgenden Schritte:
Zirkulieren von Kühlwasser mit einer hohen Temperatur von der Wärmeableitungseinheit (30) mittels eines Zirkulationsrohrs eines Rohrtyp-Wärmeableiters (50), der weiterhin Wärmerohre (52) umfasst, wobei ein Ende jedes der Wärmerohre (52) in dem Zirkulationsrohr angeordnet ist und das andere Ende außerhalb des Zirkulationsrohrs angeordnet ist, und
Sprühen von Kondenswasser mit einer niedrigen Temperatur, das von dem Vakuumsystem (40) zugeführt wird, auf die Wärmerohre (52) des Rohrtyp-Wärmeableiters (50) außerhalb des Zirkulationsrohrs, um den Wärmetausch zwischen dem aus der Wärmeableitungseinheit (30) ausgegebenen Kühlwasser und einer Atmosphäre zu beschleunigen.

5. MSF-Meerwasser-Entsalzungsverfahren nach Anspruch 4, wobei das Sprühen des Kondenswassers mit einer niedrigen Temperatur das Sprühen des Kondenswassers auf die Wärmerohre (52) durch ein Kondenswasser-Zuführrohr (54) umfasst.

6. MSF-Meerwasser-Entsalzungsverfahren nach Anspruch 5, das weiterhin das Kühlen der Wärmerohre (52) mittels eines Luftflusses von einem Kühlventilator (53) umfasst.

## Revendications

1. Processus de désalinisation MSF d'eau de mer utilisant un appareil chauffant de l'eau de mer par un échange de chaleur avec de la vapeur d'une température élevée, permettant à l'eau de mer chauffée de traverser séquentiellement une unité de récupération de chaleur (20) et une unité de dissipation de chaleur (30) de façon à produire de l'eau douce par évaporation et condensation ;
- réaliser un échange de chaleur entre l'eau de mer et la vapeur à température élevée et pression élevée par un système à pression relative négative (40) pourvu d'une pluralité de condenseurs (41) de façon à maintenir un état de pression relative négative dans l'unité de récupération de chaleur (20) ; **caractérisé par le fait qu'**il comprend les étapes consistant à :
- extraire l'eau douce d'une température élevée de l'unité de récupération de chaleur (20) afin d'alimenter en eau douce extraite un tuyau d'alimentation en eau douce (51) d'un dissipateur de chaleur de type à tuyaux (50) comprenant en outre des tuyaux de chaleur (52), une extrémité de chacun des tuyaux de chaleur (52) étant disposée dans le tuyau d'alimentation en eau douce (51) et l'autre extrémité étant disposée à l'extérieur du tuyau d'alimentation en eau douce (51) ; et
- vaporiser de l'eau de condensation d'une basse température, délivrée à partir du système à pression relative négative (40), sur les tuyaux de chaleur (52) du dissipateur de chaleur de type à tuyaux (50) disposés à l'extérieur du tuyau d'alimentation en eau douce (51) afin d'accélérer un échange de chaleur entre l'eau douce de température élevée déchargée de l'unité de récupération de chaleur (20) et une atmosphère.

2. Processus de désalinisation MSF d'eau de mer selon la revendication 1, pour lequel la vaporisation de l'eau de condensation de basse température comprend une vaporisation de l'eau de condensation sur les tuyaux de chaleur (52) par l'intermédiaire d'un tuyau d'alimentation en eau de condensation (54).

3. Processus de désalinisation MSF d'eau de mer selon la revendication 2, comprenant en outre un refroidissement des tuyaux de chaleur (52) au moyen d'un écoulement d'air produit par une soufflante de refroidissement (53).

4. Processus de désalinisation MSF d'eau de mer utilisant un appareil chauffant de l'eau de mer par un échange de chaleur avec de la vapeur d'une température élevée, permettant à l'eau de mer chauffée de traverser séquentiellement une unité de récupération de chaleur (20) et une unité de dissipation de chaleur (30) de façon à produire de l'eau douce par évaporation et condensation ;
- maintenir un état de pression relative négative dans l'unité de récupération de chaleur (20) utilisant un système à pression relative négative (40) pourvu d'une pluralité de condenseurs (41) réalisant un échange de chaleur entre l'eau de mer et la vapeur à température élevée et pression élevée ; **caractérisé par le fait qu'**il comprend les étapes consistant à :
- faire circuler de l'eau de refroidissement d'une température élevée à partir de l'unité de dissipation de chaleur (30) au moyen d'un tuyau de circulation d'un dissipateur de chaleur de type à tuyaux (50) comprenant en outre des tuyaux de chaleur (52), une extrémité de chacun des tuyaux de chaleur (52) étant disposée dans le tuyau de circulation et l'autre extrémité étant disposée à l'extérieur du tuyau de circulation ; et
- vaporiser de l'eau de condensation d'une basse température, délivrée à partir du système à pression relative négative (40), sur les tuyaux de chaleur (52) du dissipateur de chaleur de type à tuyaux (50) disposés à l'extérieur du tuyau de circulation afin d'accélérer un échange de chaleur entre l'eau de refroidissement déchargée de l'unité de dissipation de chaleur (30) et une atmosphère.

5. Processus de désalinisation MSF d'eau de mer selon la revendication 4, pour lequel la vaporisation de l'eau de condensation de basse température comprend une vaporisation de l'eau de condensation sur les tuyaux de chaleur (52) par l'intermédiaire d'un tuyau d'alimentation en eau de condensation (54).

6. Processus de désalinisation MSF d'eau de mer selon la revendication 5, comprenant en outre un refroidissement des tuyaux de chaleur (52) au moyen d'un écoulement d'air produit par une soufflante de refroidissement (53).
